Europäisches Patentamt

European Patent Office

Office européen des brevets

(11) Veröffentlichungsnummer: **0 220 424**
**A2**

## (12) EUROPÄISCHE PATENTANMELDUNG

(21) Anmeldenummer: 86112013.7

(22) Anmeldetag: 29.08.86

(51) Int. Cl.4: **F16B 13/08**

(30) Priorität: 29.10.85 DE 3538298

(43) Veröffentlichungstag der Anmeldung:
06.05.87 Patentblatt 87/19

(84) Benannte Vertragsstaaten:
AT BE CH FR GB IT LI NL

(71) Anmelder: **fischer-werke Artur Fischer GmbH & Co. KG**
**Weinhalde 14-18**
**D-7244 Tumlingen/Waldachtal 3(DE)**

(72) Erfinder: **Fischer, Arthur, Prof.-Dr. h. c.**
**Weinhalde 34**
**D-7244 Waldachtal 3/Tumlingen(DE)**

(54) Schlagspreizdübel für die Verankerung in konisch nach innen erweiterten Bohrlöchern.

(57) Die Erfindung betrifft einen Schlagspreizdübel für die Verankerung in einem Sackloch mit Hinterschneidung. Der Dübel besteht aus einem rohrförmigen geschlitzten Spreizanker mit Innengewinde zum Festsetzen von Gegenständen und einer Innenbohrung, die sich im Bereich der Schlitze zum Einführende des Spreizankers hin verjüngt. In diesen Abschnitt des Spreizankers ist ein auf dem Bohrlochgrund aufsitzender Spreizstift mit einem vom Einführende ausgehenden zylindrischen Abschnitt und einem daran anschließenden sich verjüngenden Spreizkonus eintreibbar. Aus Gründen der einfacheren Herstellung und um ein Vorspreizen beim Eintreiben des Schlagspreizdübels zu verhindern, ist der Spreizstift mit seiner konusseitigen Stirnfläche einstückig mit der Stirnfläche des Spreizankers verbunden. Ferner läuft die sich verengende Innenbohrung des Spreizankers im Spreizstift aus.

Fig. 1

## Schlagspreizdübel für die Verankerung in konisch nach innen erweiterten Bohrlöchern

Die Erfindung betrifft einen Schlagspreizdübel für die Verankerung in einem Sackloch mit Hinterschneidung, bestehend aus einem rohrförmigen geschlitzten Spreizanker mit Innengewinde zum Festsetzen von Gegenständen und einer Innenbohrung, die sich im Bereich der Schlitze zum Einführende des Spreizankers hin verjüngt, wobei in diesen Abschnitt des Spreizankers ein auf dem Bohrlochgrund aufsitzender Spreizstift mit einem vom Einführende ausgehenden zylindrischen Abschnitt und einem daran anschließenden sich verjüngenden Spreizkonus eintreibbar ist.

Die Verankerung bekannter Schlagspreizdübel in einem zylindrischen Bohrloch erfolgt dadurch, daß in die Spreizhülse ein Spreizstift eingeschlagen wird. Um das Eindringen des Spreizstiftes in die sich verengende Innenbohrung zu ermöglichen, weist der Spreizstift eine Zuspitzung und die Spreizhülse eine Verengung mit schwachem Verjüngungswinkel auf. Für die Verankerung in zylindrischen Bohrlöchern ergibt dies eine ausreichende Aufspreizung für die Verspannung des Schlagspreizdübels im Bohrloch. Es gibt jedoch Anwendungsfälle, bei denen solche für die Verankerung ansich notwendigen Spreizdrücke unerwünscht oder gar nachteilig sind. In diesen Fällen kann eine wirksame Verankerung nur durch Formschluß erzielt werden, indem das Bohrloch im Bohrlochgrund konisch erweitert wird. Um das Ausbiegen der Spreizlamellen in die konische Erweiterung zu erzielen, ist eine erheblich größere Aufspreizung als bei einer Verankerung in zylindrischen Bohrlöchern erforderlich. Für die stärkere Aufspreizung ist ein Spreizkörper mit größerem Außendurchmesser notwendig. Ein solcher Spreizkörper ist in der Regel durch die Kernbohrung des Innengewindes des Schlagspreizdübels nicht mehr einführbar.

Aus der DE-OS 31 17 581 ist bereits ein Schlagspreizdübel bekannt, der in einer mit einer Hinterschneidung versehenen Bohrung aufspreizbar ist. Die ser Dübel weist einen auf dem Bohrlochgrund aufsitzenden Spreizstift auf, auf den zur Verankerung der Spreizanker auftreibbar ist. Zur Montage und zur Sicherung des Spreizstiftes beim Einführen in das Bohrloch sind der Spreizstift und der Spreizanker über einen in die Innenbohrung des Spreizankers eingreifenden Haltezapfen des Spreizstiftes miteinander verbunden. Da der Haltezapfen, um seine Haltefunktion ausüben zu können, eine der Verjüngung der Innenbohrung angepaßte Mantelfläche aufweist, ist zum Zusammenfügen der beiden Teile zunächst ein Auf-und danach wieder ein Zusammenbiegen des geschlitzen Teils des Spreizankers erforderlich. Für die Montage der beiden Teile sind demzufolge aufwendige Einrichtungen erforderlich. Ferner kommt hinzu, daß schon bei geringstem Verkanten des Spreizstiftes eine Vorspreizung eintritt, die das Eintreiben des Spreizankers in das Bohrloch erschwert und in Einzelfällen unter Umständen unmöglich macht.

Der Erfindung liegt die Aufgabe zugrunde, einen Schlagspreizdübel zu schaffen, bei dem die vorgenannten Nachteile vermieden sind.

Erfindungsgemäß wird dies dadurch erreicht, daß der Spreizstift mit seiner konusseitigen Stirnfläche einstückig mit der Stirnfläche des Spreizankers verbunden ist, und daß die sich verengende Innenbohrung des Spreizankers im Spreizstift ausläuft.

Zur Verankerung des erfindungsgemäßen Schlagspreizdübels wird dieser soweit in das vorbereitete, eine Hinterschneidung aufweisende Bohrloch eingesetzt, bis das einführseitige Stirnende des Spreizstiftes auf dem Bohrlochgrund aufsitzt. Danach wird mit Schlägen auf die Stirnseite des Spreizankers entweder mit einem in einen Bohrhammer eingespannten Schlagwerkzeug oder mit einem Hammer der Spreizanker auf den am Bohrlochgrund aufsitzenden Spreizstift aufgetrieben. Dabei schert die Verbindungsnaht zwischen Spreizstift und Spreizanker ab, so daß der Spreizstift in die sich verengende Innenbohrung des Spreizankers eindringen kann. Greift nunmehr eine am Spreizanker angreifende Zugkraft an, so werden die Spreizlamellen durch die Hinterschnei dung des Bohrloches auf den zylindrischen Abschnitt des Spreizstiftes aufgepreßt. Dieser mit steigender Zuglast auch ansteigende Preßdruck verhindert ein Abziehen des Spreizankers vom Spreizstift.

Das Abscheren der Verbindungsnaht wird dadurch erleichtert, daß sich die verengende Innenbohrung des Spreizankers geringfügig im Spreizstift fortsetzt. Dadurch entsteht nämlich eine dünnwandige Verbindungsnaht, die beim Abscheren nach innen ausweichen kann und damit das Aufgleiten des Spreizankers auf den Spreizstift nicht behindert.

In der Zeichnung ist ein Ausführungsbeispiel der Erfindung dargestellt.

Es zeigen:

Figur 1 einen im Bohrloch des Mauerwerks eingesetzten Schlagspreizdübel im ungespreizten Zustand

Figur 2 den Schlagspreizdübel im gespreizten Zustand

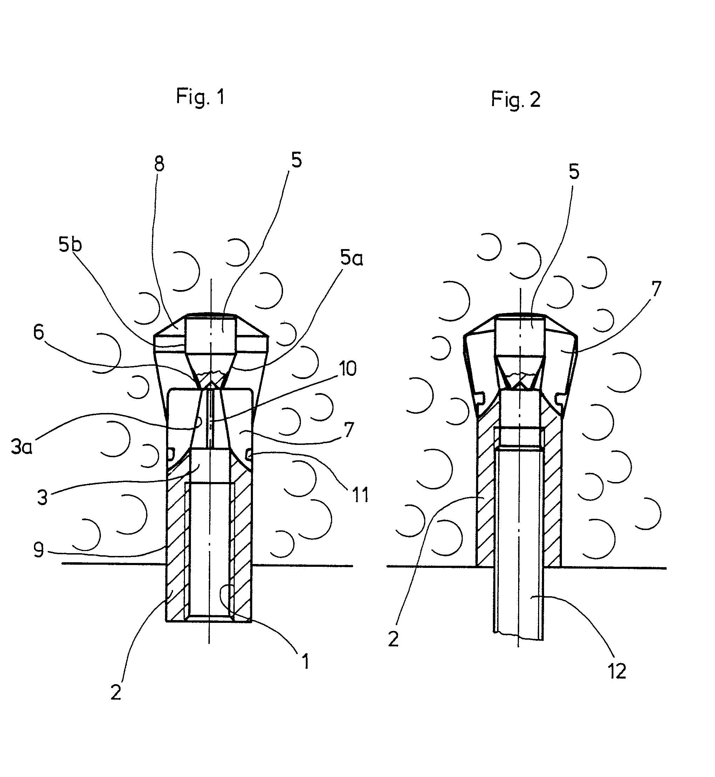

Der Schlagspreizdübel nach Figur 1 und 2 besteht aus dem ein Innengewinde 1 aufweisenden Spreizanker 2. Die Innenbohrung 3 des Spreizankers 2 weist im Bereich des geschlitzten Teils des Spreizankers eine Verjüngung 3a auf, die sich geringfügig in den an der Stirnseite des Spreizankers 2 angebundenen Spreizstift 5 erstreckt. Dadurch entsteht eine dünnwandige Verbindungsnaht 6, die leicht abscherbar ist und beim Aufgleiten des Spreizankers 2 auf den Konus 5a des Spreizstiftes 5 nach innen weggedrückt wird.

Das Auftreiben des Spreizankers 2 erfolgt durch Schläge auf die Stirnseite des Spreizankers. Dabei gleiten die Spreizlamellen 7 über den Spreizkonus 5a des Spreizstiftes 5 auf dessen zylindrischen Abschnitt 5b auf, bis die Stirnseite des Spreizankers 2 am Bohrlochgrund aufsitzt. Durch die Anpassung des Winkels der Verjüngung 3a der Innenbohrung 3 des Spreizankers 2 an den Winkel der Hinterschneidung 8 des Bohrloches 9 ergibt sich eine Flächenanlage der Spreizlamellen 7 an dem zylindrischen Abschnitt 5b des Spreizstiftes 5, während gleichzeitig die Hinterschneidung 8 des Bohrloches 9 vollständig ausgefüllt wird. Der Spreizanker 2 weist vier jeweils um 90 Grad zueinander versetzte Einschlitzungen 10 auf, die mindestens bis zu der die Aufspreizung begünstigenden Hohlkehle 11 reichen. Spreizstift 5 und Spreizanker 2 sind aus einem Stück hergestellt. Die einstückige Verbindung zwischen Spreizstift und Spreizanker bewirkt zudem, daß eine vorzeitige Aufspreizung aufgrund der Anbindung nicht eintreten kann.

Zur Befestigung eines Gegenstandes kann in das Innengewinde 1 des Schlagspreizdübels eine Gewindestange 12 oder eine Befestigungsschraube eingedreht werden.

**Ansprüche**

Schlagspreizdübel für die Verankerung in einem Sackloch mit Hinterschneidung, bestehend aus einem rohrförmigen geschlitzten Spreizanker mit Innengewinde zum Festsetzen von Gegenständen und einer Innenbohrung, die sich im Bereich der Schlitze zum Einführende des Spreizankers hin verjüngt, wobei in diesem Abschnitt des Spreizankers ein auf dem Bohrlochgrund aufsitzender Spreizstift mit einem vom Einführende ausgehenden zylindrischen Abschnitt und einem daran anschließenden sich verjüngenden Spreizkonus eintreibbar ist, dadurch gekennzeichnet, daß der Spreizstift mit seiner konusseitigen Stirnfläche einstückig mit der Stirnfläche des Spreizankers verbunden ist, und daß die sich verengende Innenbohrung des Spreizankers im Spreizstift ausläuft.

Fig. 1

Fig. 2